# EUROPEAN PATENT SPECIFICATION

(11) **EP 2 050 652 B1**
(45) Date of publication and mention of the grant of the patent: **10.08.2011**
(21) Application number: 07118757.9
(22) Date of filing: 18.10.2007
(51) Int. Cl.: B62B 5/06

(54) **Tiller arm of adjustable length and an industrial truck comprising said tiller arm**
Deichsel mit einstellbarer Länge und Flurförderzeug mit dieser Deichsel
Levier à main de longueur réglable et camion industriel doté dudit levier à main

(43) Date of publication of application: 22.04.2009
(73) Proprietor: BT Products AB, 595 81 Mjölby (SE)
(72) Inventor: Asklöv, Kristoffer, 582 35, Linköping (SE); Öhman, Marcus, 461 35, Trollhättan (SE)
(74) Representative: Hyltner, Jan-Olof

(56) References cited:
- EP-A- 1 700 767
- EP-A- 1 700 778
- WO-A-2006/067228
- GB-A- 2 008 065

## Description

### TECHNICAL FIELD

The present invention deals with an industrial truck such as a tiller truck. More particular it deals with a tiller truck with a tiller arm that has a tiller arm that has an adjustable length. The technical field of the invention is described in the preamble of Claim 1.

### BACKGROUND ART

In this field it's a particular problem that depending on the length of the user the tiller arm needs to be of different lengths. I.e. a taller user has a need for a "gripping level" of said arm that is higher than a smaller user. Another problem associated with the length of the tiller arm is that depending on whether the user walks with the tiller truck or if he is riding on a platform of the truck, the length of the tiller arm should preferably be of different lengths. Another problem associated with length and tiller arms is the security of the user. It's is of great importance for the user that the said tiller arm when length adjusted does not change its length by itself.

Tiller arms for industrial trucks with adjustable length are known in the prior art. One example of this is known in EP 1 700 767 A2, where a tiller arm according to the preamble of claim 1 with an adjustable tiller arm length is disclosed. This tiller arms has a power driven device for changing the length of the said tiller arm. The length control can be actuated in an automated manner depending on the speed of the truck. A manual control of the length is also provided. The drive unit of the power driven arm is provided adjacent the tiller head. One disadvantage of this solution is that it is technically complicated and costly. Electrical power has to be transported from the main battery to the adjusting motor. The motor, if used manually, is subjected to lengthy periods of rest. This in turn will increase costs for usage and service in an unfavourable manner.

Another document of the prior art EP 1 700 778 A1 discloses a tiller arm which changes its length depending on the angle of the said tiller arm with respect to the industrial truck. In yet another document, GB 2 008 065 A, there is disclosed a tiller arm that has a tiller arm that is automatically shortened when the tiller arm is released by the user. The said arm is consequently longer when the arm is pivoted down by the user. The length difference is not controllable by the user. The said arm has two main lengths, i.e. the released short length, when said arm is in a vertical resting position and long length when pivoted down by the user. Said length difference is aided with gas springs. There is no real means provided for individual adjustment of the tiller arm.

### SUMMARY OF THE INVENTION

At least one of the above discussed disadvantages is solved by an invention according to the characterising part of claim 1. More particular it's solved by a tiller arm for an industrial truck such as a tiller arm truck, comprising a first member displaceably arranged in relation to a second member, so as to provide for a individual length change of said tiller arm, and further comprising a pressure device arranged to assists said length change in at least one direction, with an essentially static force and, that said pressure device is manually compressible, and that said tiller arm is arranged to be fixable in length in at least two positions, by a fixing device, after said individual length change.

The above discussed tiller arm is a simple yet useful solution of one of the problems discussed. The individual length change is a manual length change, which is solved in a particularly simple manner. Individual should be understood as that the tiller arm can be adjusted to a desired length. There is no need for electrical wiring. Further no power consumption is needed for the change of the tiller arm length other than the manual power from the user itself. This provides for a reliable solution where, operation is easy. The need for service and lubrication of moving parts are minimized.

In another embodiment of the invention the said first member is telescopically arranged with said second member so that one of the two is slidable inside the other.

This has the effect that operation of the displacement is favoured. In particular the manufacturing of the members displaceable with regard to each other are particularly favoured. There is an ease with which the dimensions can be chosen, since the outer dimension of the thinner member corresponds with the inner dimension of the thicker member. One other advantage is that the tiller arm in any chosen individual length can be arranged to be stable. This means that if the dimension of the thinner is close to or corresponding essentially with the outer member the stability of the tiller arm with regard to bending of its structure can be assured.

In another embodiment one of said first or second member comprises a low friction contact surface for allowing said displacement.

This has the effect that the telescopic movement of the tiller arm members is favoured. By adding low friction surfaces the friction of the relative movement between said first member and said second member can be adjusted. In one case an adjustment to lower the friction is preferable. In one case an adjustment to augment the friction is preferable.

In another embodiment the said low friction contact surface is formed on detachable member attached to one or both telescopic members in a detachable manner, by for example a bolt joining.

This has the effect that said service of the friction surfaces is favoured. They can easily be changed. One other effect of this embodiment is that the play between said first member and said second member can be adjusted, by choosing different thicknesses of the friction surface members. One other way of adjusting the play is in a conventional manner with adjusting screws.

In another embodiment said fixing device is manually operable by a user.

This has the effect that said tiller arm can be adjusted in a manual manner. The user can adapt the length of the tiller arm as desired. By using a separate member for the fixing a precise fixing can be achieved. Another effect is that said member can be serviced in a simple manner since it can be changed individually. Another effect is that the fixing member can be of different kind for different users. A user desiring a firm absolute fixing can be provided with a stronger fixing member. A user desiring a light and easier to operate fixing member can be provided with another fixing member.

In another embodiment said fixing device comprises a first and a second fixing device.

This has the effect that a double securing can be obtained. There from a very secure fixing of the length can be obtained. One other advantage is that one securing member can be used when the user is testing the desired length. When the desired length has been achieved the user fixes both fixing members, thereby obtaining a securely fixed length of the tiller arm.

In another embodiment said first fixing device and said second fixing device are designed differently, such as bolt and a pin or a screw and a pin or a friction device and a pin.

This has the advantage that the fixing device has more options when adapting the fixing device to the user. Another advantage is that the security of fixing is improved.

I another embodiment said fixing device is comprised into or in association with said pressure device.

This has the effect that said fixing device can be made particularly light and easy to operate. The number of parts in this embodiment is very few.

In another embodiment said pressure device comprises a gas spring.

This is a particularly reliable solution. It has the effect of allowing a very smooth aid for changing the length of the tiller arm. It's also a solution which renders low cost. The gas spring allows for adjusting the force by which said pressure device should aid the length change of said tiller arm.

In another embodiment said pressure device comprises a helical spring.

This has the effect of allowing a powerful pressure device for aiding the change of length of the tiller arm. Another effect is a reliable solution which has a good persistence. The helical spring as for the gas spring above allows for choosing different forces by which said pressure device will aid to alter the length of said tiller arm.

In another embodiment said pressure device comprises both a gas spring and a helical spring.

This has the effect that the pressure device can use the force of the helical spring in combination with the smoothness of the gas spring. Another advantage is that smaller members can be used and allowing for a better use of the space allowed for these members in the tiller arm.

In another embodiment said fixing device is arranged to allow step less adjustment of said tiller arm length.

This is particularly favourable for a precise adjustment. The user can chose an individual length of the tiller arm that corresponds more or less exactly to his desire. This solution provides for a lightweight construction of the fixing device.

In another embodiment the fixing device comprises a friction device, such as a screw, acting on a surface of a moveable member of the pressure device.

This has the effect that the number of parts needed for allowing the fixing is minimised. The construction can in a secure manner use the parts of the pressure device already in place for the force aid.

In another embodiment said fixing device is arranged to fix said length adjustment in a step comprising mode.

This solution is favourable when a very secure fixing of the tiller arm length is needed. This solution is very reliable and the length is fixed and does not creep over a period of time. Another advantage is that when several different users utilize the truck they can easily recognize the step which corresponds to there own preferred length. This can also be an advantage for a user using different lengths at different operating conditions.

In another embodiment said fixing device comprises a pin arranged to engage with a one of a plurality of openings proportionally arranged to pass a pre engaging position of said pin.

This solution has the advantages named above. It is a particularly reliable solution. Good durability is provided for. It's a strong fixing which can be exposed to particularly heavy operation.

Another solution to the above mentioned problem is an industrial truck such as a tiller arm truck comprising the tiller arm above.

A truck of this kind has all the advantages mentioned above for the particular tiller arm. The truck can be used in an ergonomic manner. The truck allows for an easy, low cost, individual adjustment of the length of the tiller arm.

### BRIEF DESCRIPTION OF THE DRAWINGS

Fig. 1 discloses an exploded view of an embodiment of the tiller arm of the invention.
Fig. 2 discloses a low lift industrial truck fitted with a tiller arm of one embodiment of the invention, wherein said tiller arm is in an extended position.
Fig. 3 discloses the low lift truck of Fig. 2 wherein the tiller arm is in a non extended state.
Fig. 4 discloses a high lift industrial truck fitted with a tiller arm of one embodiment of the invention, wherein the tiller arm is in an extended state.
Fig. 5 discloses the high lift industrial truck of Fig. 4 wherein said tiller arm is in a non extended state.
Fig. 6 discloses a longitudinal section view of one embodiment of the tiller arm of the invention.
Fig. 7 discloses a side section view of the embodiment of Fig. 6.
Fig. 8 discloses perspective section view elevation of another embodiment of a tiller arm of the invention.
Fig 9 discloses a part of a tiller arm of one embodiment using a helical spring for applying the pressure.
Fig 10 discloses a part of a tiller arm of one embodiment wherein both a helical spring and a gas spring are provided.

### DETAILED DESCRIPTION

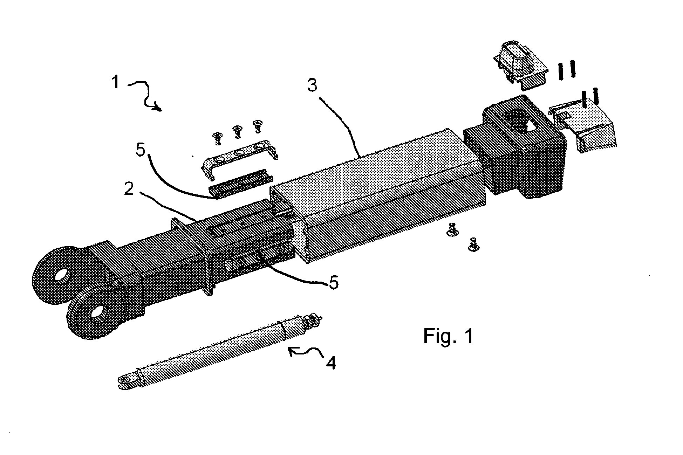

One preferred embodiment of said invention is disclosed in Fig. 1. In this embodiment the tiller arm 1 has a first member 2. The first member 2 is opted to fit into a second member 3. Said first member 2 and said second member 3 are movable in a telescopic manner. A pressure device 4 is provided. A low friction contact surface is provided on a detachable member 5. Said movement is aided by the low friction contact surface. The pressure device 4 aids the lengthening of said tiller arm 1.

Said first member 2 is in one example made of aluminium, but can be made in any suitable material such as composite plastics or any metal alloy with suitable properties e.g. steel. The member 2 has in one embodiment a rectangular cross section, but can have any suitable geometric shape of its cross section, such as circular, ellipsoid. The corners of said embodiment with rectangular cross section are preferably rounded. The rounding makes the member 2 less sensitive to bending forces when the tiller arm 1 is extended, and provides for less sharp edges that could harm a user.

On said first member 2 are a detachable 5 member screwed. Said member is in this embodiment shaped as a u and the said low friction surface is essentially perpendicular to the shown attachment means, e.g. screws, the said surface, is formed on the two "rails" of the u. This makes the low friction contact surfaces detachable and exchangeable. In this embodiment there are four detachable members 5 comprising low friction contact surfaces. The members comprising the low friction contact surfaces are attached in an essentially centred position on the outer peripheral four sides of the said first member 2. In one example the length of the detachable members 5 comprising the low friction contact surfaces corresponds to the length of the telescopic relative movement of the first 2 and the second member 3. The detachable members 5 comprising the low friction contact surfaces are for example made of low friction steel. The low friction contact surfaces section of the detachable members can of course as is known to the skilled person be made in any suitable low friction material, such as polytetraflourethylen or other lowfriction plastic material.

In another embodiment, not shown, said members 5 comprising the low friction contact surface are attached in a non detachable manner, such as with gluing, welding, soldering, or any other way know to the skilled man.

In yet another embodiment, also not shown, low friction contact surfaces are formed directly on the said first member 2.

The second member 3 is in one example made of aluminium, but can be made in any suitable material such as composite plastics or any metal alloy with suitable properties e.g. steel. The member 3 has in one example a rectangular cross section, but can have any suitable geometric shape of its cross section, such as circular, ellipsoid. The inside cavity of the member 3 has a cross section which in shape essentially resembles the peripheral shape of the section of member 2 which is opted to enter member 3. The cross section of the inside cavity of the section of member 3 that receives member 2 has rounded corners. These rounded corners correspond to the corners of the cross section of member 2 outer periphery.

In one embodiment there are provided corresponding low friction contact surfaces on the inside of the cavity of the member 3. These low friction contact surfaces are opted to receive the low friction contact surfaces attached on the first member 2. These low friction contact surfaces are preferably of the same quality as the corresponding low friction contact surfaces of the first member 2.

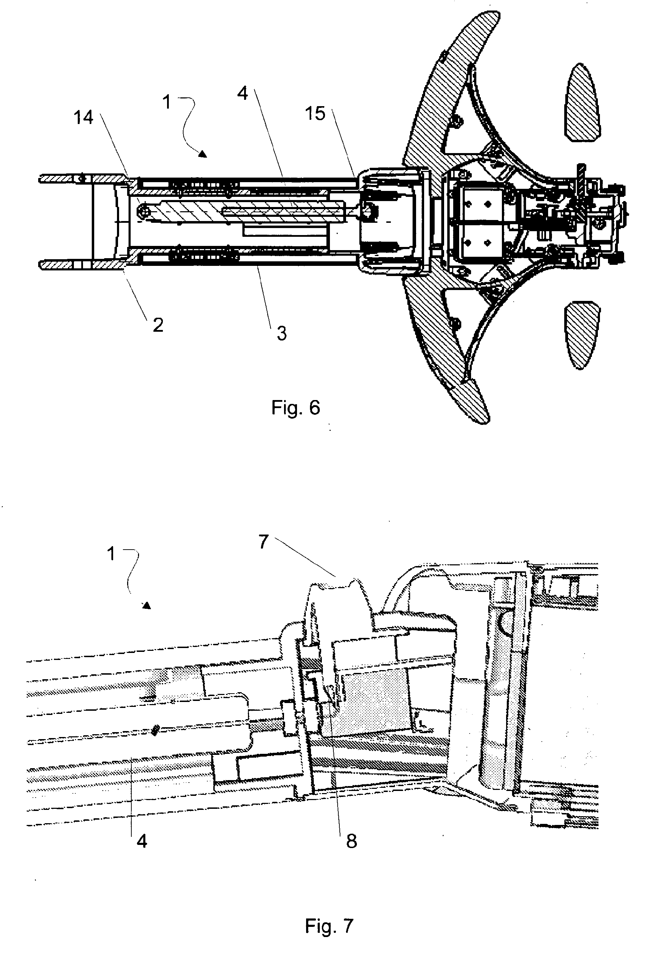

A pressure device 4 provided so as to provide the force that aids extending the said tiller arm, as can be seen in Fig. 7 is provided. In Fig 1 this pressure device 4 is a gas spring, but as will be understood later the pressure device can be of any kind, e.g. helical spring, elastic rubber means, or any other suitable construction. The pressure device 4 is provided with a fixing device. This fixing device is operable by a user. In this embodiment the fixing device is by default always fixed, unless the user releases it. The fixing device may be located inside the said pressure device 4. A release device 7 is provided. The release device 7 is in one embodiment disclosed in Fig 7 and is a button device 7. The button device 7 of Fig. 7 acts on the releasing element of the gas spring of this embodiment. If the button device 7 is pressed by a user the fixing device i.e. locking mechanism inside the gas spring is released. The gas spring can be of any type having an incorporated fixing device. Such gas springs are available on the market. In another embodiment not shown the release device 7 is comprised in the handle of the tiller arm. This would increase the manoeuvrability of the release device 7 to the user since he doesn't need to move his hands from the handle of the tiller arm.

A release of said fixing device causes the pressure device 4, to act on members 2 and 3. Members 2 and 3 are thereby opted to be slid by the pressure from the pressure device 4. If said pressure device 4 is strong, the telescopic movement is performed by it alone. Said pressure device can also be used to balance the weight of the outer part of the tiller arm 1 so that the user only needs to add reduced amount of pressure for extending said tiller arm 1. This latter embodiment is particularly favourable, since the counter pressure from the pressure device is reduced and it becomes easier to shorten the tiller arm 1.

In Fig. 6 the pressure device 4 is shown connected with one first end to member 2 and one second end to member 3. In order to slide member 2 inside member 3, the pressure device 4 cooperates with the movement, when extension is performed. This cooperation is performed by applying a pressure on both connection points 14, 15 by said first and second end of the pressure device 4. When movement in the reverse direction is desired a pressure is applied from the user upon the tiller arm handle, which is associated with one of said connection points 14, 15. The pressure device is then pushed together. This movement may be performed when said release device are acted upon.

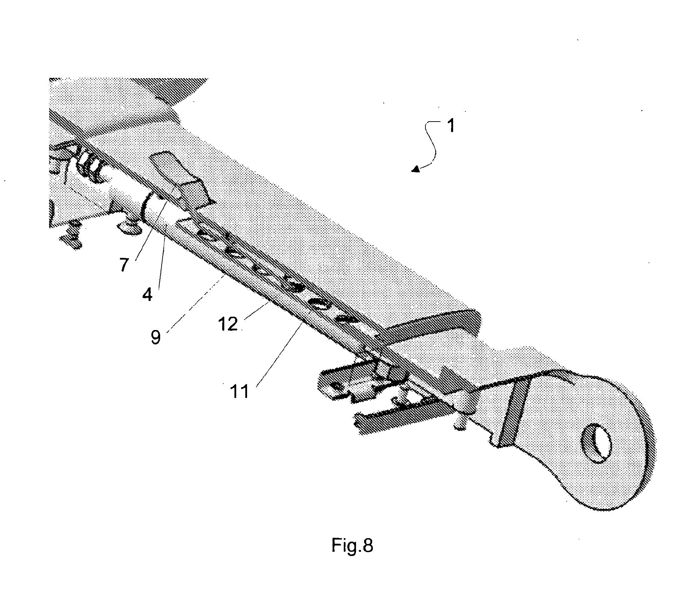

Fig 8 shows another embodiment of the invention. In this embodiment the fixing device is a bar 9 and opening 11 assembly. By acting on the release device 7 the pressure device 4 can aid a length change of the tiller arm 1. In this embodiment the release device 7 is a plate. Said plate has at one first end a pin 12 attached. The pin 12 is moved out of a locking position when the release device 7 is pressed. The spring force of the plate is arranged to hold the pin 12 in the desired position, i.e. opening 11. This design of the fixing device is very robust and reliable.

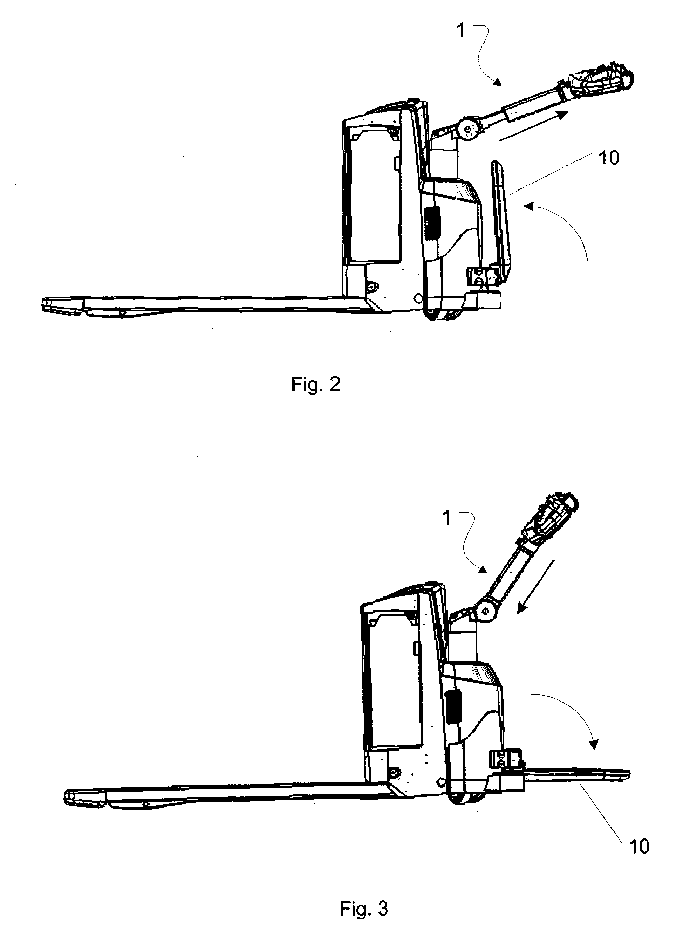

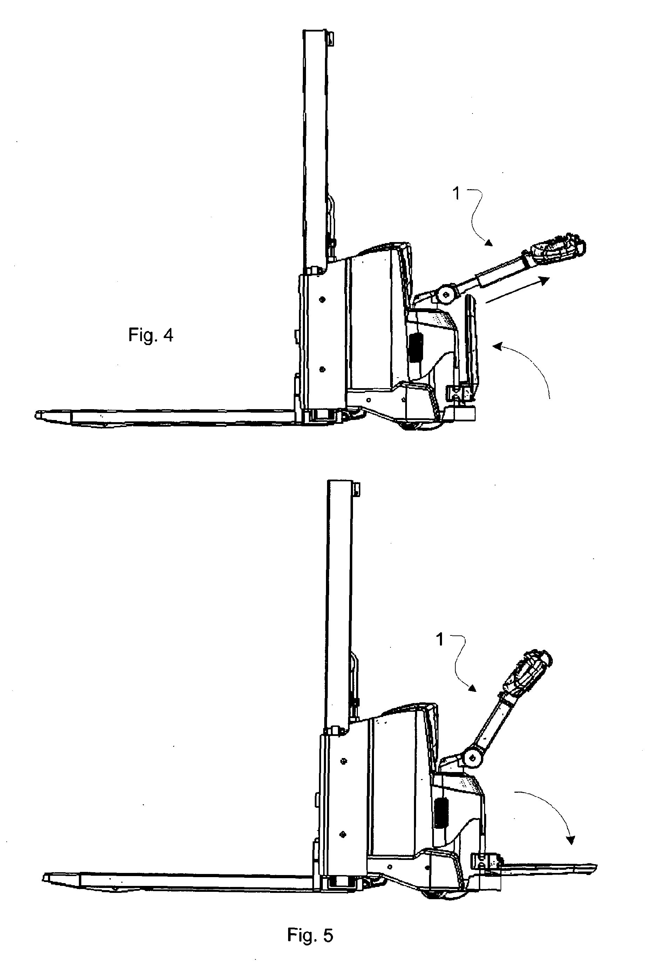

In Figs. 2-5 different user modes is disclosed. Fig.2 discloses a tiller arm 1 that has been extended when a user transport platform 10 has been folded up. This mode is for walking behind the industrial truck of Fig. 2. Fig 3 discloses the industrial truck of Fig. 3 wherein the user transport platform has been folded down, and the tiller arm 1 is in a shorter state than in Fig. 2. These two modes are two main modes in which the locking of the tiller arm length is essential. For example would it be dangerous for a user if the tiller arm of Fig.2 when standing on the platform 10, is extended without desire of the user, since the user can fall of the platform 10. In mode of Fig. 2 a longer tiller arm is desired so that the user doesn't hit the industrial truck with his feet when walking behind it.

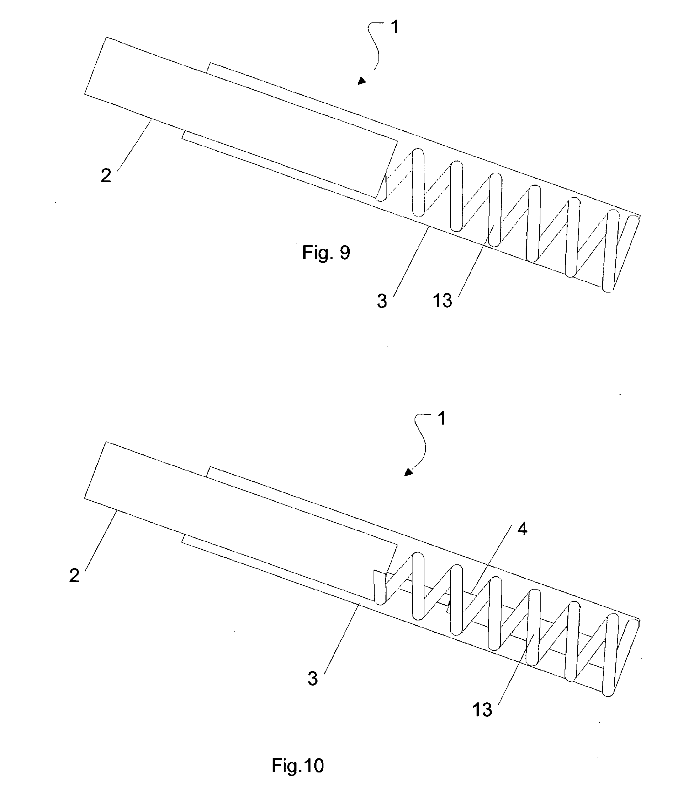

In another embodiment disclosed in Fig. 9 the pressure device 4 is a helical spring 13.

In another embodiment both a helical spring 13 and a gas spring 4 constitutes a pressure device 4, as in Fig 10.

Other embodiments of the present invention are also imaginable in the scope of the claims of the present invention.

## Claims

1. Tiller arm (1) for an industrial truck such as a tiller arm truck, comprising a first member (2) displaceably arranged in relation to a second member (3), so as to provide for an individual length change of said tiller arm, and further comprising a pressure device (4) arranged to assist said length change in at least one direction, with an essentially static force, wherein said tiller arm (1) is arranged to be fixable in length in at least two positions, by a fixing device, after said individual length change, **characterized in, that** said pressure device (4) is manually compressible.

2. Tiller arm (1) according to claim 1 for an industrial truck such as a tiller arm truck where in said first member (2) is telescopically arranged with said second member (3) so that one of the two is slidable inside the other.

3. Tiller arm (1) according to claim 2 for an industrial truck such as a tiller arm truck where in one of said first or second member comprises a low friction contact surface allowing said displacement.

4. Tiller arm (1) according to claim 3 for an industrial truck such as a tiller arm truck wherein the said low friction contact surface is formed on detachable members (5) attached to one or both telescopic members (2, 3) in a detachable manner, by for example a bolt joining.

5. Tiller arm (1) according to claims 1-4 for an industrial truck such as a tiller arm truck wherein said fixing device is manually operable by a user.

6. Tiller arm (1) according to claim 1-5 for an industrial truck such as a tiller arm truck where in said fixing device is arranged to fix said length adjustment in a step comprising mode.

7. Tiller arm (1) according to claim 6 for an industrial truck such as a tiller arm truck where in said fixing device comprises a pin (12) arranged to engage with a one of a plurality of openings (11) proportionally arranged to pass a pre engaging position of said pin.

8. Tiller arm (1) according to claims 1-7 for an industrial truck such as a tiller arm truck where in, said fixing device is comprised into or in association with said pressure device (4).

9. Tiller arm (1) according to claim 1-8 for an industrial truck such as a tiller arm truck where in, said pressure device (4) comprises a gas spring.

10. Tiller arm (1) according to claims 1-8 for an industrial truck such as a tiller arm truck where in, said pressure device (4) comprises a helical spring.

11. Tiller arm (1) according to claims 1-8 for an industrial truck such as a tiller arm truck wherein, said pressure device (4) comprises both a gas spring and a helical spring.

12. Tiller arm (1) according to claims 1-5, 8-11 for an industrial truck such as a tiller arm truck wherein said fixing device is arranged to allow step less adjustment of said tiller arm length.

13. Tiller arm (1) according to claim 12 for an industrial truck such as a tiller arm truck wherein the fixing device comprises a friction device, such as a screw, acting on a surface of a moveable member of the pressure device.

14. Tiller arm (1) according to any of the claims above for an industrial truck such as a tiller arm truck, wherein said fixing device comprises a first and a second fixing device.

15. Tiller arm (1) according to claim 14 for an industrial truck such as a tiller arm truck where in said first fixing device and said second fixing device are designed differently, such as bolt and a pin or a screw and a pin or a friction device and a pin.

16. Industrial truck such as a tiller arm truck comprising the tiller arm (1) of any of claims 1-15 above.

## Patentansprüche

1. Deichsel (1) für ein Flurförderfahrzeug, wie zum Beispiel ein Deichsel-Flurförderfahrzeug, die ein erstes Glied (2) aufweist, das in Bezug zu einem zweiten Glied (3) verschiebbar angeordnet ist, um so eine individuelle Änderung der Länge der Deichsel bereitzustellen, und die weiterhin eine Druckeinrichtung (4) aufweist, die angeordnet ist, um bei der Änderung der Länge in mindestens einer Richtung mit einer im Wesentlichen statischen Kraft zu unterstützen, wobei die Deichsel (1) angeordnet ist, um in der Länge in mindestens zwei Positionen durch eine Fixationseinrichtung nach der individuellen Änderung der Länge fixierbar zu sein, **dadurch gekennzeichnet**, das die Druckeinrichtung (4) manuell zusammendrückbar ist.

2. Deichsel (1) gemäß Anspruch 1 für ein Flurförderfahrzeug, wie zum Beispiel ein Deichsel-Flurförderfahrzeug, bei der das erste Glied (2) mit dem zweiten Glied (3) ausziehbar angeordnet ist, so dass eines der beiden innerhalb des anderen verschiebbar ist.

3. Deichsel (1) gemäß Anspruch 2 für ein Flurförderfahrzeug, wie zum Beispiel ein Deichsel-Flurförderfahrzeug, bei der das erste oder zweite Glied eine Kontaktfläche mit niedriger Reibung aufweist, die die Verschiebung ermöglicht.

4. Deichsel (1) gemäß Anspruch 3 für ein Flurförderfahrzeug, wie zum Beispiel ein Deichsel-Flurförderfahrzeug, bei der die Kontaktfläche mit niedriger Reibung auf abnehmbaren Giedern (5) ausgebildet ist, die an einem oder beiden ausziehbaren Gliedern (2, 3) in einer abnehmbaren Weise, beispielsweise mit einem Bolzengelenk, angebracht sind.

5. Deichsel (1) gemäß einem der Ansprüche 1-4 für ein Flurförderfahrzeug, wie zum Beispiel ein Deichsel-Flurförderfahrzeug, bei der die Fixationseinrichtung durch einen Benutzer bedienbar ist.

6. Deichsel (1) gemäß einem der Ansprüche 1-5 für ein Flurförderfahrzeug, wie zum Beispiel ein Deichsel-Flurförderfahrzeug, bei der die Fixationseinrichtung angeordnet ist, um die Anpassung der Länge in einer stufenumfassenden Art und Weise zu fixieren.

7. Deichsel (1) gemäß Anspruch 6 für ein Flurförderfahrzeug, wie zum Beispiel ein Deichsel-Flurförderfahrzeug, bei der die Fixationseinrichtung einen Stift (12) aufweist, der angeordnet ist, um in eine von einer Vielzahl von Öffnungen (11) einzugreifen, die proportional angeordnet sind, um an einer Voreingriffsposition des Stifts vorbei zu gehen.

8. Deichsel (1) gemäß einem der Ansprüche 1-7 für ein Flurförderfahrzeug, wie zum Beispiel ein Deichsel-Flurförderfahrzeug, bei der die Fixationseinrichtung in der Druckeinrichtung (4) enthalten oder mit ihr assoziiert ist.

9. Deichsel (1) gemäß einem der Ansprüche 1-8 für ein Flurförderfahrzeug, wie zum Beispiel ein Deichsel-Flurförderfahrzeug, bei der die Druckeinrichtung (4) eine Druckfeder aufweist.

10. Deichsel (1) gemäß einem der Ansprüche 1-8 für ein Flurförderfahrzeug, wie zum Beispiel ein Deichsel-Flurförderfahrzeug, bei der die Druckeinrichtung (4) eine Schraubenfeder aufweist.

11. Deichsel (1) gemäß einem der Ansprüche 1-8 für ein Flurförderfahrzeug, wie zum Beispiel ein Deichsel-Flurförderfahrzeug, bei der die Druckeinrichtung (4) sowohl eine Druckfeder als auch eine Schraubenfeder aufweist.

12. Deichsel (1) gemäß einem der Ansprüche 1-5, 8-11 für ein Flurförderfahrzeug, wie zum Beispiel ein Deichsel-Flurförderfahrzeug, bei der die Fixationseinrichtung angeordnet ist, um eine stufenlose Arretierung der Deichsellänge zuzulassen.

13. Deichsel (1) gemäß Anspruch 12 für ein Flurförderfahrzeug, wie zum Beispiel ein Deichsel-Flurförderfahrzeug, bei dem die Fixationseinrichtung eine Reibungseinrichtung umfasst, wie zum Beispiel eine Schraube, die auf einer Oberfläche eines bewegbaren Glieds der Druckeinrichtung wirkt.

14. Deichsel (1) gemäß einem der vorstehenden Ansprüche für ein Flurförderfahrzeug, wie zum Beispiel ein Deichsel-Flurförderfahrzeug, bei der die Fixationseinrichtung eine erste und eine zweite Fixationseinrichtung umfasst.

15. Deichsel (1) gemäß Anspruch 14 für ein Flurförderfahrzeug, wie zum Beispiel ein Deichsel-Flurförderfahrzeug, bei der die erste Fixationseinrichtung und die zweite Fixationseinrichtung unterschiedlich gestaltet sind, wie zum Beispiel als Bolzen und ein Stift oder eine Schraube und ein Stift oder eine Reibungseinrichtung und ein Stift.

16. Flurförderfahrzeug, wie zum Beispiel ein Deichsel-Flurförderfahrzeug, das die Deichsel (1) gemäß einem der vorstehenden Ansprüche 1-15 aufweist.

## Revendications

1. Levier à main (1) pour un camion industriel tel qu'un chariot à levier à main, comprenant un premier élément (2) agencé de manière déplaçable par rapport à un deuxième élément (3), afin de fournir un changement de longueur individuelle dudit levier à main, comprenant en outre un dispositif à pression (4) agencé pour aider ledit changement de longueur dans au moins une direction, avec une force essentiellement statique, dans lequel ledit levier à main (1) est agencé pour pouvoir être fixé en longueur dans au moins deux positions, par un dispositif de fixation, après ledit changement de longueur individuelle, **caractérisé en ce que** ledit dispositif à pression (4) est compressible manuellement.

2. Levier à main (1) selon la revendication 1, pour un camion industriel tel qu'un chariot à levier à main, dans lequel ledit premier élément (2) est agencé de manière télescopique avec ledit deuxième élément (3) de sorte que l'un des deux peut coulisser à l'intérieur de l'autre.

3. Levier à main (1) selon la revendication 2, pour un camion industriel tel qu'un chariot à levier à main, dans lequel l'un desdits premier ou deuxième éléments comprend une surface de contact à faible frottement permettant ledit déplacement.

4. Levier à main (1) selon la revendication 3 pour un camion industriel tel qu'un chariot à levier à main, dans lequel ladite surface de contact à faible frottement est formée sur des éléments détachables (5) fixés sur l'un des ou les deux éléments télescopiques (2, 3) d'une manière détachable, par exemple un assemblage de boulon.

5. Levier à main (1) selon les revendications 1 à 4, pour un camion industriel tel qu'un chariot à levier à main, dans lequel ledit dispositif de fixation est actionnable manuellement par un utilisateur.

6. Levier à main (1) selon les revendications 1 à 5, pour un camion industriel tel qu'un chariot à levier à main, dans lequel ledit dispositif de fixation est agencé pour fixer ledit ajustement de longueur dans un mode d'inclusion de paliers.

7. Levier à main (1) selon la revendication 6, pour un camion industriel tel qu'un chariot à levier à main, dans lequel ledit dispositif de fixation comprend une broche (12) agencée pour se mettre en prise avec une ouverture d'une pluralité d'ouvertures (11) agencées de manière proportionnelle afin de passer par une position de mise en prise préalable de ladite broche.

8. Levier à main (1) selon les revendications 1 à 7, pour un camion industriel tel qu'un chariot à levier à main, dans lequel ledit dispositif de fixation est compris dans ledit ou associé audit dispositif à pression (4).

9. Levier à main (1) selon les revendications 1 à 8, pour un camion de manutention tel qu'un chariot à levier à main, dans lequel ledit dispositif à pression (4) comprend un ressort à gaz.

10. Levier à main (1) selon les revendications 1 à 8, pour un camion industriel tel qu'un chariot à levier à main, dans lequel ledit dispositif à pression (4) comprend un ressort hélicoïdal.

11. Levier à main (1) selon les revendications 1 à 8, pour un camion industriel tel qu'un chariot à levier à main, dans lequel ledit dispositif à pression (4) comprend à la fois un ressort à gaz et un ressort hélicoïdal.

12. Levier à main (1) selon les revendications 1 à 5 et 8 à 11, pour un camion industriel tel qu'un chariot à levier à main, dans lequel ledit dispositif de fixation est agencé pour permettre un ajustement sans palier de ladite longueur du bras de timon.

13. Levier à main (1) selon la revendication 12, pour un camion industriel tel qu'un chariot à levier à main, dans lequel le dispositif de fixation comprend un dispositif de friction, tel qu'une vis, agissant sur une surface d'un élément mobile du dispositif de pression.

14. Levier à main (1) selon l'une quelconque des revendications ci-dessus, pour un camion industriel tel qu'un chariot à levier à main, dans lequel ledit dispositif de fixation comprend un premier et un deuxième dispositif de fixation.

15. Levier à main (1) selon la revendication 14, pour un camion de manutention tel qu'un chariot à levier à main, dans lequel ledit premier dispositif de fixation et ledit deuxième dispositif de fixation sont conçus différemment, tels qu'un boulon et une broche ou une vis et une broche ou un dispositif de friction et une broche.

16. Camion industriel tel qu'un chariot à levier à main comprenant le levier à main (1) selon l'une quelconque des revendications 1 à 15 précedentes.
